(19) Europäisches Patentamt
European Patent Office
Office européen des brevets

(11) **EP 2 874 863 B1**

(12) **EUROPÄISCHE PATENTSCHRIFT**

(45) Veröffentlichungstag und Bekanntmachung des Hinweises auf die Patenterteilung:
**14.09.2016** Patentblatt **2016/37**

(51) Int Cl.:
***B62D 25/04*** *(2006.01)*    ***B62D 25/08*** *(2006.01)*
***B62D 25/14*** *(2006.01)*

(21) Anmeldenummer: **13737144.9**

(22) Anmeldetag: **12.07.2013**

(86) Internationale Anmeldenummer:
**PCT/EP2013/002079**

(87) Internationale Veröffentlichungsnummer:
**WO 2014/012644 (23.01.2014 Gazette 2014/04)**

(54) **TRAGSTRUKTUR FÜR EIN KRAFTFAHRZEUG**

SUPPORT STRUCTURE FOR A MOTOR VEHICLE

STRUCTURE PORTEUSE POUR VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2012 DE 102012014117**

(43) Veröffentlichungstag der Anmeldung:
**27.05.2015** Patentblatt **2015/22**

(73) Patentinhaber: **Audi AG**
**85045 Ingolstadt (DE)**

(72) Erfinder:
• **NEUFELDT, Christian**
**74177 Bad Friedrichshall (DE)**

• **STRATING, Arjan**
**74189 Weinsberg (DE)**
• **CARLE, Klaus-Dieter**
**74074 Heilbronn (DE)**
• **HANCZEWSKI, Astrid**
**74906 Bad Rappenau (DE)**

(74) Vertreter: **Patzelt, Heike Anna Maria**
**AUDI AG,**
**Patentabteilung**
**85045 Ingolstadt (DE)**

(56) Entgegenhaltungen:
**WO-A1-95/04616        WO-A1-2008/050237**
**DE-A1- 19 518 946     DE-A1-102006 055 721**

**Beschreibung**

Die Erfindung betrifft eine Tragstruktur für ein Kraftfahrzeug gemäß dem Oberbegriff des Patentanspruchs 1.

Derartige Tragstrukturen sind im modernen Fahrzeugbau hinlänglich bekannt und sind wichtige Bauteile eines Kraftfahrzeugs. Sie umfassen im Wesentlichen einen Stirnwandquerträger und zwei A-Säulen, die einerseits die erforderliche Stabilität und Verbindungssteifigkeit sicherstellen und andererseits bei einem Fahrzeugaufprall durch Deformationen Aufprallkräfte aufnehmen sollen. Insbesondere muss die genannte Tragstruktur des Kraftfahrzeugs eine Steifigkeit aufweisen, die im Falle eines Fahrzeugaufpralls die Beschädigung des Fahrzeuges und die Gefährdung der Insassen minimiert. Üblicherweise wird der Stirnwandquerträger mit den A-Säulen über einfache Flanschverbindungen verbunden, wodurch es bei einem Aufprall in der Regel zu einer hohen Intrusion in den Vorderwagen des Fahrzeugs und somit auch in die Fahrgastzelle kommen kann.

Aus der DE 10 2006 055 721 A1 ist beispielsweise eine Tragstruktur für ein Kraftfahrzeug mit zwei A-Säulen, einer Stirnwand und einem als Hohlprofil ausgeführten Stirnwandquerträger bekannt. Die Enden des Stirnwandquerträgers sind mit der jeweils zugeordneten A-Säule über Flansche verbunden, welche durch Umbiegen entsprechender Abschnitte des als Hohlprofil ausgeführten Stirnwandquerträgers hergestellt sind.

In der Offenlegungsschrift EP 2 353 974 A2 wird beispielsweise eine weitere Tragstruktur für ein Kraftfahrzeug im Bereich einer Federbeinaufnahme beschrieben. Die Federbeinaufnahme wird in einem oberen Anschlussbereich mit einer Kotflügelbank und in einem unteren Anschlussbereich mit einem der Kotflügelbank versetzt angeordneten Längsträger verbunden. Zur Anbindung der Federbeinaufnahme mit dem Längsträger umklammern zwei Schenkel der Federbeinaufnahme den als Hohlprofil ausgeführten Längsträger, wobei der mit der Federbeinaufnahme einteilig ausgebildete erste Schenkel mit dem Längsträger fest verbunden ist. Der als zusätzliches Bauteil ausgeführte zweite Schenkel der Federbeinaufnahme ist in einem ersten Endbereich fest mit der Federbeinaufnahme verbunden und in einem zweiten Endbereich liegt er an einer Außenwand des Längsträgers an.

Aus der DE 195 18 946 A1 ist ein Strukturelement eines Fahrzeugs mit geschlossenem

Querschnitt bekannt. Das Strukturelement ist aus Leichtmetallplattenelementen gebildet. Das Strukturelement ist beispielsweise als Vordersäule eines Fahrzeugs ausgeführt und umfasst eine Außenplatte, eine Säulenversteifung und eine Innensäule aus Leichtmetall.

Aus der WO 95/04616 A1 ist eine Tragstruktur für ein Kraftfahrzeug bekannt, welche zumindest zwei A-Säulen, eine Stirnwand und einen als Hohlprofil ausgeführten Stirnwandquerträger umfasst, dessen Enden mit der jeweils zugeordneten A-Säule verbunden sind. Die Verbindung des Stirnwandquerträgerendes erfolgt über eine momentensteife Einwurzelung in der A-Säule durch eine formschlüssige Verbindung.

Aus der WO 2008/050237 A1 ist eine Tragstruktur für ein Kraftfahrzeug bekannt, welche zumindest zwei A-Säulen, eine Stirnwand und einen als Hohlprofil ausgeführten Stirnwandquerträger umfasst, dessen Enden mit der jeweils zugeordneten A-Säule verbunden sind. Die Verbindung des Stirnwandquerträgerendes erfolgt über eine momentensteife Einwurzelung in der A-Säule in Form einer Schraubverbindung mit einem Verstärkungsprofil, welches in der A-Säule formschlüssig verbaut ist. Das Stirnwandquerträgerhohlprofil weist eine stirnwandabgewandte Außenschale und eine stirnwandzugewandte Innenschale auf, wobei ein Endbereich der Innenschale zumindest teilweise an der A-Säule anliegt.

Die Aufgabe der Erfindung ist es, eine Tragstruktur für ein Kraftfahrzeug zu schaffen, die eine besonders steife und stabile Anbindung eines Stirnwandquerträgers an die A-Säulen ermöglicht.

Erfindungsgemäß wird die Aufgabe durch Bereitstellung einer Tragstruktur für ein Kraftfahrzeug mit den Merkmalen des Patentanspruchs 1 gelöst. Vorteilhafte Ausführungsformen und Weiterbildungen der Erfindung sind in den abhängigen Ansprüchen angegeben.

Um eine Tragstruktur für ein Kraftfahrzeug zu schaffen, welche eine besonders steife und stabile Anbindung eines Stirnwandquerträgers an die A-Säulen ermöglicht, wird erfindungsgemäß vorgeschlagen, dass die Verbindung des Stirnwandquerträgerendes über eine momentensteife Einwurzelung in der A-Säule erfolgt. Ein wesentlicher Vorteil der Erfindung besteht darin, dass der Stirnwandquerträger im Bereich der Knotengeometrie eine sichere Abstützung und eine besonders stabile Verbindung mit der jeweiligen A-Säule aufweist, welche im Falle eines Fahrzeugaufpralls eine deutliche Verbesserung der Momentensteifigkeit aufweist. In diesem Zusammenhang soll unter "Knotengeometrie" insbesondere eine über das Normalmaß hinaus gehende Anzahl an Verbindungstellen zwischen den Bauteilen auf engstem Raum verstanden werden. Dadurch kann in vorteilhafter Weise erreicht werden, dass insbesondere schräg bzw. nicht ideal senkrecht auf die Karosserie einwirkende Momentenbelastungen und Druckbelastungen besonders gut von der Tragstruktur der Karosserie aufgenommen und homogen an die Tragstruktur der Karosserie weitergeleitet werden können. Durch die erfindungsgemäßen Verbindungstellen des Stirnwandquerträgers kann in vorteilhafte Weise gewährleistet werden, dass die über den Stirnwandquerträger in die Stirnwand und insbesondere in die A-Säulen einwirkenden Aufprallkräfte gut aufgenommen und gleichmäßig übertragen werden können, wodurch Kraftspitzen vermieden und die angrenzenden Tragstrukturen der Karosserie entlastet werden können. Auf Grund der erfindungsgemäßen Verbindung kann die Steifigkeit der Karosserie des Kraftfahrzeugs wesentlich verbessert werden, wodurch große Momente und hohe Zugkräfte bzw. hohe Druckkräfte optimal aufgenommen werden können. Zudem weist die im Bereich der erfindungsgemäßen Verbindung ausgestaltete Knotengeometrie neben einem geringen Gewicht und einer hohen Steifigkeit den Vorteil eines ausgeglichenen Zug-Druck-Verhältnisses mit einer verbesserten spezifischen Energieaufnahmefähigkeit auf. Die erfindungsgemäße Verbindung kann einfach und kostengünstig hergestellt werden. Im Ergebnis lässt sich somit ein verbesserter Schutz des Vorderbaus der Fahrzeugkarosserie bzw. des Motorraums und der Insassen des Fahrzeugs realisieren, da die Tragstruktur im Falle eines Frontaufpralls besser zur Verzehrung von Aufprallenergie herangezogen werden kann und Intrusionen in den Motorraum sowie in die Fahrgastzelle weitgehend reduziert werden können.

Das Stirnwandquerträgerhohlprofil weist eine stirnwandabgewandte Außenschale und eine stirnwandzugewandte Innenschale auf. In vorteilhafter Weise kann dadurch eine verwindungssteife und leichte Tragstruktur hergestellt werden, welche einwirkende Aufprallkräfte großflächig aufnehmen und somit die Momentensteifigkeit zusätzlich verbessern kann. Dadurch ergibt sich auf konstruktiv einfache Weise ein Stirnwandquerträger mit einem großen Querschnitt und einer hohen Steifigkeit, dessen große Anlageflächen bzw. Verbindungsflächen sich optimal für eine einfache Montage mit einer sicheren Anbindung an die Tragstruktur der Karosserie eignen. Die bogenförmigen Teilbereiche des vorzugsweise W-förmig ausgebildeten Stirnwandquerträgers weisen sowohl eine hohe Biegesteifigkeit als auch eine hohe Torsionssteifigkeit auf und können somit eine sichere Übertragung der einwirkenden Aufprallkräfte in die A-Säule gewährleisten.

Erfindungsgemäß ist ein Endbereich der Außenschale zumindest teilweise innerhalb der A-Säule angeordnet und ein Endbereich der Innenschale liegt zumindest teilweise an der A-Säule an. Dadurch kann eine stoffschlüssige oder kraftschlüssige Anbindung des Endbereichs des Stirnwandquerträgerhohlprofils auf mehrere Bereiche und/oder mehrere Ebenen des Profils der A-Säule verteilt werden, wodurch Druckkräfte großflächig auf Innenflächen und Außenflächen des A-Säulenprofils verteilt und übertragen werden können. Auf Grund der großflächigen Anbindung kann ein Lastpfad mit kontinuierlichem Kraftfluss entstehen, welcher ein Abknicken oder Verdrehen des an der A-Säule angebundenen Stirnwandquerträgers verhindern kann. Durch die erfindungsgemäße Anbindung des Stirnwandquerträgers innerhalb der A-Säule, kann auch die A-Säule in ihrer Mitte zusätzlich von innen stabilisiert werden.

In weiterer vorteilhafter Ausgestaltung der erfindungsgemäßen Tragstruktur kann der innerhalb der A-Säule angeordnete Endbereich der Außenschale zumindest teilweise an einem Verstärkungselement anliegen. Dadurch kann in vorteilhafter Weise eine Verbesserung der Momentensteifigkeit des Verstärkungselements erfolgen. Insbesondere durch eine zielgerichtete Anordnung des Verstärkungselements kann eine definierte Einstellung der Belastbarkeit des Stirnwandquerträgers sowie der Energieabsorptionsfähigkeit der Tragstruktur der Karosserie erzielt werden. Der Endbereich der Außenschale kann zusätzlich stabilisiert werden und ein Abknicken der Außenschale im Endbereich kann verhindert werden. Dadurch kann der Endbereich der Außenschale eine eingeleitete Aufprallkraft auf zwei Teilbereiche der A-Säule bzw. in zwei Richtungen auf die A-Säule übertragen und abbauen. Einwirkende Aufprallkräfte bzw. Drehmomente können im Endbereich der Außenschale bzw. im Bereich der A-Säule durch die Mehrfachanbindung des Endbereichs der Außenschale wirkungsvoll absorbiert werden. Das Verstärkungselement kann unterschiedlich ausgebildet sein und/oder auch den Stirnwandquerträger teilweise oder vollständig umschließen und dadurch besonders gut erhöhte Druckbelastungen absorbieren und an angrenzende Bauteile weiterleiten. Ein weiterer Vorteil kann darin gesehen werden, dass vor dem endgültigen Verbinden der beiden Bauteile sich diese sowohl in einer horizontalen Ebene als auch in einer vertikalen Ebene verschieben lassen und somit eventuell vorhandene Toleranzen ausgeglichen werden können. Dadurch kann in vorteilhafter Weise bereits beim Einlegen des Stirnwandquerträgers in die A-Säule eine Vereinfachung der Montage und ein Toleranzausgleich erzielt werden, wodurch Herstellungskosten und Montagekosten gesenkt werden können.

In weiterer vorteilhafter Ausgestaltung der erfindungsgemäßen Tragstruktur kann, der innerhalb der A-Säule angeordnete Endbereich der Außenschale zumindest teilweise an einem Element der A-Säule anliegen. Durch eine weitere Anbindung des Endbereichs der Außenschale kann ein Teil der auftretenden Momente und Zugkräfte bzw. Druckkräfte über das Element auf die A-Säule weitergeleitet werden, wodurch die Momentensteifigkeit und die Lagestabilität des Stirnwandquerträgers weiter verbessert werden können. In vorteilhafter Weise kann jede weitere Anbindung des Stirnwandquerträgers an die Tragstruktur für die einwirkenden Kräfte einen neuen Lastpfad erzeugen, wodurch die einwirkenden Kräfte auf eine große Fläche verteilt und eine Reduzierung der punktuellen Belastung verhindert werden kann. Zudem kann ein derartiges Element kostengünstig hergestellt und schnell montiert werden.

In weiterer vorteilhafter Ausgestaltung der erfindungsgemäßen Tragstruktur kann das Verstärkungselement an seinen Enden jeweils mit der A-Säule verbunden werden. In vorteilhafter Weise kann das Verstärkungselement beidseitig eine sehr stabile Abstützung aufweisen und die eingeleitete Belastung vom Stirnwandquerträger dadurch besonders gut aufnehmen. Dadurch kann beispielsweise ein Teil der Belastung über die jeweiligen Enden an die A-Säule weitergeleitet werden. Solche Verstärkungselemente können kostengünstig hergestellt und schnell, insbesondere in der Vormontage, montiert werden.

In weiterer vorteilhafter Ausgestaltung der erfindungsgemäßen Tragstruktur kann das Verstärkungselement an einem Ende mit dem Element der A-Säule verbunden werden. In vorteilhafter Weise kann hierdurch eine weitere Anbindung des Verstärkungselements ermöglicht werden, was zu einer zusätzlichen Versteifung des Verstärkungselements bzw. der Knotengeometrie innerhalb der A-Säule führt.

In weiterer vorteilhafter Ausgestaltung der erfindungsgemäßen Tragstruktur können das Verstärkungselement und das Element der A-Säule Flansche ausbilden, über welche sie miteinander verbunden werden können, wobei an die Flansche jeweils eine Abkragung anschließen kann, an welche der Endbereich der Außenschale zumindest teilweise anliegen kann. Ein wesentlicher Vorteil sind die großen Oberflächen des Verstärkungselements und des Elements der A-Säule, wodurch nach der Anbindung des Stirnwandquerträgers eine wesentliche Verbesserung der Momentensteifigkeit des Verstärkungselements innerhalb der Knotengeometrie erreicht werden kann.

In weiterer vorteilhafter Ausgestaltung der erfindungsgemäßen Tragstruktur kann in einem Bereich der A-Säule, in welchem die Innenschale des Stirnwandquerträgers anliegt, ein Verstärkungsprofil in die A-Säule eingelegt werden. In vorteilhafter Weise kann durch die innere Stabilisierung der A-Säule die Torsionssteifigkeit der A-Säule wesentlich verbessert werden. Solche Verstärkungsprofile können kostengünstig hergestellt und wirtschaftlich montiert werden.

In weiterer vorteilhafter Ausgestaltung der erfindungsgemäßen Tragstruktur kann in einem Übergangsbereich von einem Mittelbereich in einen Endbereich des Stirnwandquerträgerhohlprofils ein Stabilisierungsprofil im Stirnwandquerträgerhohlprofil angeordnet werden. Dadurch ist in vorteilhafter Weise bei einfacher Herstellung des Stabilisierungsprofils eine gute Anpassung des U-förmigen Stabilisierungsprofils an die geometrischen Innenabmessungen des Stirnwandquerträgerhohlprofils möglich. Da eine dauerhafte Verbindung des Stabilisierungsprofils mit dem Stirnwandquerträgerhohlprofil hergestellt werden kann, ist im Falle eines Fahrzeugaufpralls eine hohe Formstabilität des Stirnwandquerträgers und insbesondere in der Knotengeometrie bzw. an den Anbindungen des Stirnwandquerträgers beibehaltbar, wodurch auftretende Aufprallkräfte besonders gut aufgenommen und weitergeleitet werden können.

Vorteilhafte Ausführungsformen der Erfindung sind in der Zeichnung dargestellt und werden nachfolgend beschrieben.

Dabei zeigen:

Fig. 1   eine perspektivische Darstellung eines Vorderbaus einer Fahrzeugkarosserie mit einer erfindungsgemäßen Tragstruktur für ein Kraftfahrzeug,

Fig. 2   eine schematische Schnittdarstellung der erfindungswesentlichen Teile der erfindungsgemäßen Tragstruktur für ein Kraftfahrzeug mit einer A-Säule und einem Stirnwandquerträger entlang der Linie B-B aus Fig. 1,

Fig. 3   eine perspektivische Darstellung der erfindungsgemäßen Tragstruktur aus Fig. 1 im montierten Zustand,

Fig. 4a   eine schematische Prinzipdarstellung eines lose gelagerten Balkens mit mittiger Einzellast, und

Fig. 4b   eine schematische Prinzipdarstellung eines befestigt gelagerten Balkens mit mittiger Einzellast.

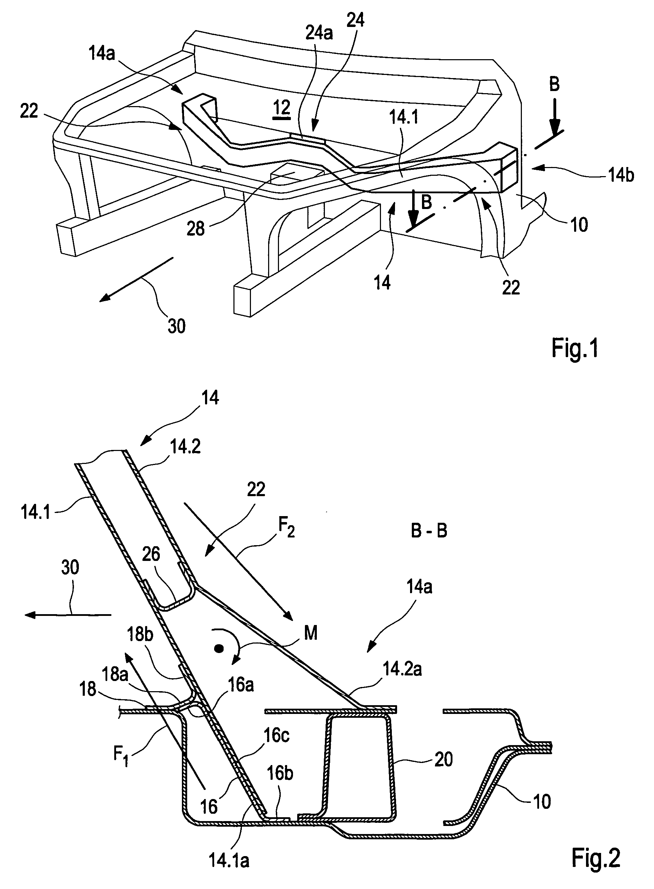

Wie aus Fig. 1 bis 3 ersichtlich ist, umfasst ein dargestellter Vorderbau einer Fahrzeugkarosserie eine erfindungsgemäße Tragstruktur für ein Kraftfahrzeug, welche zwei A-Säulen 10, eine Stirnwand 12 und einen als Hohlprofil ausgeführten Stirnwandquerträger 14 umfasst. Die Enden 14a, 14b des Stirnwandquerträgers 14 sind mit der jeweils zugeordneten A-Säule 10 verbunden. Der Stirnwandquerträger 14 ist im Wesentlichen in Fahrzeuglängsrichtung 30 W-förmig ausgebildet und horizontal oberhalb des Mitteltunnels 28 der Fahrzeugkarosserie angeordnet. Die besonders stark belasteten Anbindungsbereiche des Stirnwandquerträgers 14 sind im Verhältnis zu den dazwischen liegenden Bereichen vergrößert ausgebildet. Daher weist der zur Stirnwand 12 ausgebildete Mittelbereich 24 des Stirnwandquerträgers 14 eine vergrößerte Auflagefläche 24a auf und ist mit der Stirnwand 12 der Fahrzeugkarosserie verbunden. Der vorzugsweise rechteckig ausgebildete Querschnitt des symmetrisch gestalteten Stirnwandquerträgers 14 vergrößert sich zunehmend in Richtung seiner Enden 14a, 14b. Die nicht an die Fahrzeugkarosserie angebundenen bogenförmig Bereiche des Stirnwandquerträgers 14 sind von der Fahrzeugkarosserie beabstandet und können im Falle eines Fahrzeugaufpralls Aufprallkräfte in Form von Deformationsenergie absorbieren, wodurch eine Intrusion in die Fahrgastzelle vermieden werden soll. Über die Anbindungsstellen des Stirnwandquerträgers 14, welche in der Phase der Kollision zumindest annähernd unverformt bleiben sollen, ist dabei eine sichere Abstützung des Stirnwandquerträgers 14 gewährleistet.

Um eine Tragstruktur für ein Kraftfahrzeug zu schaffen, welche eine besonders steife und stabile Anbindung eines Stirnwandquerträgers 14 an die A-Säulen 10 ermöglicht, wird erfindungsgemäß vorgeschlagen, dass die Verbindung des Stirnwandquerträgerendes 14a, 14b über eine momentensteife Einwurzelung in der A-Säule 10 erfolgt.

Wird der Stirnwandquerträger 14 in der A-Säule 10 nicht nur gelagert, sondern erfindungsgemäß mit und innerhalb der A-Säule 10 mehrfach fest verbunden, dann kann bei einer Belastung des Stirnwandquerträgers 14 eine Verbesserung der Durchbiegung des Stirnwandquerträgers 14 erzielt werden.

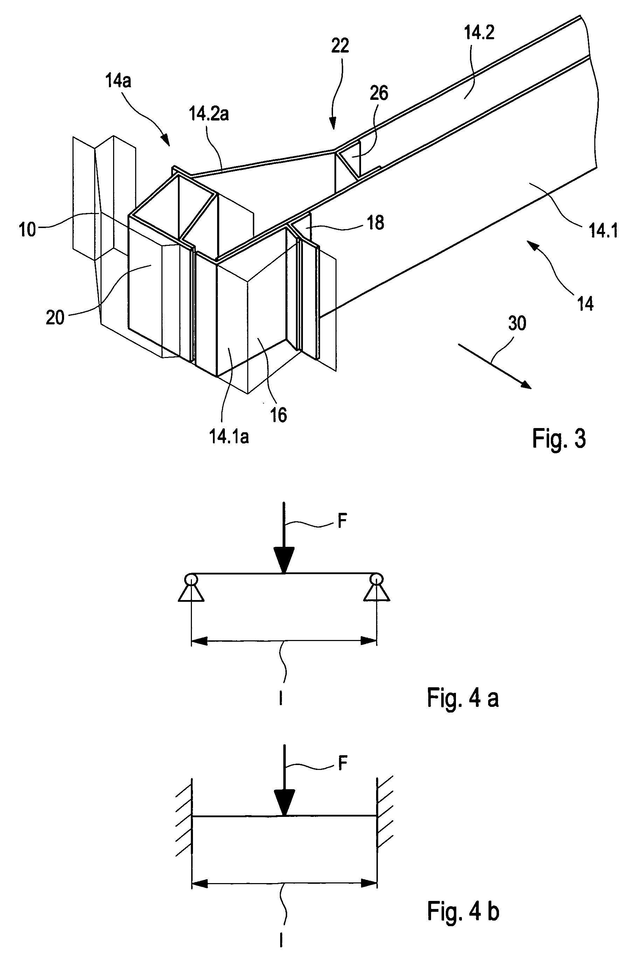

Wie aus Fig. 4a ersichtlich ist, weist ein lose gelagerter Balken mit einer vorgegebenen Länge I und einem vorgegebenen Elastizitätsmodul E bei einem Trägheitsmoment I und einer mittigen Einzellast F eine Durchbiegung f1 auf, welche nach Gleichung (1) näherungsweise berechnet werden kann.

$$f_1 = F * l^3 /(48 * E * I) \qquad (1)$$

Wie aus Fig. 4b ersichtlich ist, weist der gleiche Balken mit der vorgegebenen Länge I und dem vorgegebenen Elastizitätsmodul E bei gleichem Trägheitsmoment I und einer mittigen Einzellast F, welcher beidseitig befestigt ist, einen um den Faktor vier geringere Durchbiegung f auf, welche nach Gleichung (2) näherungsweise berechnet werden kann.

$$f_2 = F * l^3 /(192 * E * I) \qquad (2)$$

Wie aus Fig. 1 bis 3 weiter ersichtlich ist, weist das Stirnwandquerträgerhohlprofil 14 eine stirnwandabgewandte Außenschale 14.1 und eine stirnwandzugewandte Innenschale 14.2 auf. Die Außenschale 14.1 und die Innenschale 14.2 als auch die orthogonal zu der Außenschale 14.1 bzw. Innenschale 14.2 angeordneten Schalenelemente des Stirnwandquerträgerhohlprofils 14 sind zwischen den Enden 14a, 14b des Stirnwandquerträgers 14 im Wesentlichen parallel zueinander ausgebildet und weisen in Richtung der Enden 14a, 14b des Stirnwandquerträgers 14 voneinander divergierende Schalenflächen auf. Die Schalenflächen des Stirnwandquerträgerhohlprofils 14 können als zusätzliche versteifungsbildende Maßnahme nicht dargestellte Sicken oder auch andere einem Fachmann als sinnvoll erscheinende Verformungen aufweisen.

Wie aus Fig. 2 und 3 weiter ersichtlich ist, ist in einem Übergangsbereich 22 von einem Mittelbereich 24 in einen Endbereich 14a, 14b des Stirnwandquerträgerhohlprofils 14 ein Stabilisierungsprofil 26 im Stirnwandquerträgerhohlprofil 14 angeordnet. Dadurch wird im Übergangsbereich 22 über ein zusätzliches als Versteifungselement ausgebildetes Stabilisierungsprofil 26 die Formstabilität gesichert und die Torsionssteifigkeit des Stirnwandquerträgerhohlprofils 14 verbessert.

Wie aus Fig. 2 und 3 weiter ersichtlich ist, ist ein Endbereich 14.1a der Außenschale 14.1 zumindest teilweise innerhalb der A-Säule 10 angeordnet, und ein Endbereich 14.2a der Innenschale 14.2 liegt zumindest teilweise an der A-Säule 10 an. Um einen fließenden Kraftverlauf einer Kraft $F_2$ vom Übergangsbereich 22 bis zur Anbindung des Endbereichs 14.2a der Innenschale 14.2 an der A-Säule 10 zu erreichen, ist die Innenschale 14.2 im Übergangsbereich 22 abgewinkelt. Durch diese Anordnung der Innenschale 14.2 kann eine von außen auf die A-Säule 10 eingeleitete Aufprallkraft $F_1$ oder eine auf den Stirnwandquerträger 14 eingeleitete Aufprallkraft $F_2$ ohne Kraftspitzen übertragen werden.

Weiterhin ist aus der Fig. 2 und 3 erkennbar, dass der innerhalb der A-Säule 10 angeordnete Endbereich 14.1a der Außenschale 14.1 zumindest teilweise an einem Verstärkungselement 16 und zumindest teilweise an einem Element 18 der A-Säule 10 anliegt. Das Verstärkungselement 16 und das Element 18 können plan oder uneben ausgebildet sein oder auch den Stirnwandquerträger 14 teilweise oder vollständig umschließen. Das Element 18 ist vorzugsweise in der gleichen Ebene mit der A-Säule 10 verbunden wie die Anbindung des Endbereichs 14.2a der Innenschale 14.2 an der A-Säule 10.

Bei dieser Mehrfachanbindung des Endbereichs 14.1a der Außenschale 14.1 kann eine auf den Stirnwandquerträger 14 eingeleitete Aufprallkraft F2 auf zwei Teilbereiche der A-Säule 10 bzw. in zwei Richtungen auf die A-Säule 10 übertragen und abgebaut werden. Von außen auf die A-Säule 10 und von innen auf den Stirnwandquerträger 14 einwirkende Aufprallkräfte F1, F2 bzw. Drehmomente M können im Endbereich 14.1a der Außenschale 14.1 bzw. im Bereich der A-Säule durch die Mehrfachanbindung des Endbereichs 14.1a der Außenschale 14.1 wirkungsvoll absorbiert werden.

Eine besonders gute Abstützung weist das Verstärkungselement 16 auf, welches an seinen Enden 16a, 16b jeweils mit der A-Säule 10 verbunden ist, wobei das Verstärkungselement 16 an einem Ende 16a mit dem Element 18 der A-Säule 10 verbunden ist.

Das Verstärkungselement 16 ist parallel zum Endbereich 14.1 a der Außenschale 14.1 angeordnet und mit diesem befestigt.

Wie aus Fig. 2 und 3 weiter ersichtlich ist, bilden das Verstärkungselement 16 und das Element 18 der A-Säule 10 Flansche 16a, 18a aus, über welche sie miteinander verbunden sind, wobei an die Flansche 16a, 18a jeweils eine Abkragung 16c, 18b anschließt, an welche der Endbereich 14.1 a der Außenschale 14.1 zumindest teilweise anliegt. Sowohl die Abkragung 16c des Verstärkungselements 16 als auch die Abkragung 18b des Elementes 18 sind parallel zum Endbereich 14.1 a der Außenschale 14.1 angeordnet und mit diesem befestigt, wodurch ein stabile Verbindung zwischen den Bauteilen gewährleistet werden kann.

Um eine stabile Basis für die vielen Verbindungen zwischen dem Stirnwandquerträger 14 und der A-Säule 10 in der Knotengeometrie der A-Säule 10 bereitzustellen, ist in einem Bereich der A-Säule 10, in welchem die Innenschale 14.2 des Stirnwandquerträgers 14 anliegt, ein Verstärkungsprofil 20 in die A-Säule 10 eingelegt. Das Verstärkungsprofil 20 weist vorzugsweise ein rechteckiges Hohlprofil auf und ist über zumindest zwei Außenflächen mit den Innenwänden der A-Säule 10 verbunden.

Bevorzugt werden die Bauteile an den Verbindungsstellen durch Schweißen, insbesondere durch Punktschweißen, formschlüssig miteinander verbunden, wobei jedoch auch andere einem Fachmann als sinnvoll erscheinende Verbindungstechniken denkbar sind.

BEZUGSZEICHENLISTE

| 10 | A-Säule |
| 12 | Stirnwand |
| 14 | Stirnwandquerträger |
| 14a, 14b | Ende (Stirnwandquerträger) |
| 14.1 | Außenschale (Stirnwandquerträger) |
| 14.1 a | Endbereich (Außenschale) |
| 14.2 | Innenschale (Stirnwandquerträger) |
| 14.2a | Endbereich (Innenschale) |
| 16 | Verstärkungselement |
| 16a, 16b | Flansch (Verstärkungselement) |
| 16c | Abkragung (Verstärkungselement) |
| 18 | Element (A-Säule) |
| 18a | Flansch (Element) |
| 18b | Abkragung (Element) |
| 20 | Verstärkungsprofil |
| 22 | Übergangsbereich |
| 24 | Mittelbereich |
| 24a | Auflagefläche (Mittelbereich) |
| 26 | Stabilisierungsprofil |
| 28 | Mitteltunnel |
| 30 | Fahrzeuglängsrichtung |

| F, $F_1$, $F_2$ | Kraft |
| M | Drehmoment |
| f | Durchbiegung |
| l | Länge des Balkens |
| E | Elastizitätsmodul |
| I | Trägheitsmoment |

**Patentansprüche**

1. Tragstruktur für ein Kraftfahrzeug zumindest mit zwei A-Säulen (10), einer Stirnwand (12) und einem als Hohlprofil ausgeführten Stirnwandquerträger (14), dessen Enden (14a, 14b) mit der jeweils zugeordneten A-Säule (10) verbunden sind, wobei die Verbindung des Stirnwandquerträgerendes (14a, 14b) über eine momentensteife Einwurzelung in der A-Säule (10) erfolgt, wobei das Stirnwandquerträgerhohlprofil (14) eine stirnwandabgewandte Außenschale (14.1) und eine stirnwandzugewandte Innenschale (14.2) aufweist, und wobei ein Endbereich (14.2a) der Innenschale (14.2) zumindest teilweise an der A-Säule (10) anliegt, **dadurch gekennzeichnet, dass** ein Endbereich (14.1a) der Außenschale (14.1) zumindest teilweise innerhalb der A-Säule (10) angeordnet ist.

2. Tragstruktur nach Anspruch 1, **dadurch gekennzeichnet, dass** der innerhalb der A-Säule (10) angeordnete Endbereich (14.1 a) der Außenschale (14.1) zumindest teilweise an einem Verstärkungselement (16) anliegt.

3. Tragstruktur nach Anspruch 1 oder 2, **dadurch gekennzeichnet, dass** der innerhalb der A-Säule (10) angeordnete Endbereich (14.1a) der Außenschale (14.1) zumindest teilweise an einem Element (18) der A-Säule (10) anliegt.

4. Tragstruktur nach Anspruch 2 oder 3, **dadurch gekennzeichnet, dass** das Verstärkungselement (16) an seinen Enden (16a, 16b) jeweils mit der A-Säule (10) verbunden ist.

5. Tragstruktur nach Anspruch 3 oder 4, **dadurch gekennzeichnet, dass** das Verstärkungselement (16) an einem Ende (16a) mit dem Element (18) der A-Säule (10) verbunden ist.

6. Tragstruktur nach einem der Ansprüche 3 bis 5, **dadurch gekennzeichnet, dass** das Verstärkungselement (16) und das Element (18) der A-Säule (10) Flansche (16a, 18a) ausbilden, über welche sie miteinander verbunden sind, wobei an die Flansche (16a, 18a) jeweils eine Abkragung (16c, 18b) anschließt, an welche der Endbereich (14.1a) der Außenschale (14.1) zumindest teilweise anliegt.

7. Tragstruktur nach einem der Ansprüche 1 bis 6, **dadurch gekennzeichnet, dass** in einem Bereich der A-Säule (10), in welchem die Innenschale (14.2) des Stirnwandquerträgers (14) anliegt, ein Verstärkungsprofil (20) in die A-Säule (10) eingelegt ist.

8. Tragstruktur nach einem der Ansprüche 1 bis 7, **dadurch gekennzeichnet, dass** in einem Übergangsbereich (22) von einem Mittelbereich (24) in einen Endbereich (14a, 14b) des Stirnwandquerträgerhohlprofils (14) ein Stabilisierungsprofil (26) im Stirnwandquerträgerhohlprofil (14) angeordnet ist.

**Claims**

1. Support structure for a motor vehicle at least having two A-columns (10), a front wall (12) and a front wall cross member (14) designed as a hollow profile, the ends (14a, 14b) of which are connected to the respectively allocated A-column (10), wherein the connection of the front wall cross member (14a, 14b) occurs via a torque-rigid rooting in the A-column (10), wherein the front wall cross member hollow profile (14) has an outer shell (14.1) facing away from the front wall and an inner shell (14.2) facing towards the front wall, and wherein an end region (14.2a) of the inner shell (14.2) abuts at least partially onto the A-column (10), **characterised in that** an end region (14.1a) of the outer shell (14.1) is arranged at least partially within the A-column (10).

2. Support structure according to claim 1, **characterised in that** the end region (14.1a) of the outer shell (14.1) arranged within the A-column (10) abuts at least partially onto a reinforcing element (16).

3. Support structure according to claim 1 or 2, **characterised in that** the end region (14.1a) of the outer shell (14.1) arranged within the A-column (10) abuts at least partially onto an element (18) of the A-column (10).

4. Support structure according to claim 2 or 3, **characterised in that** the reinforcing element (16) is connected to the A-column (10) at its ends (16a, 16b) respectively.

5. Support structure according to claim 3 or 4, **characterised in that** the reinforcing element (16) is connected to the element (18) of the A-column (10) at one end (16a).

6. Support structure according to any one of claims 3 to 5, **characterised in that** the reinforcing element (16) and the element (18) of the A-column (10) form flanges (16a, 18a), via which they are connected to each other, wherein a protrusion (16c, 18b) connects to the flanges (16a, 18a) respectively, onto which protrusion the end region (14.1a) of the outer shell (14.1) at least partially abuts.

7. Support structure according to any one of claims 1 to 6, **characterised in that** a reinforcing profile (20) is inserted into the A-column (10) in a region of the A-column (10) in which the inner shell (14.2) of the front wall cross member (14) abuts.

8. Support structure according to any one of claims 1 to 7, **characterised in that** a stabilising profile (26) is arranged in the front wall cross member hollow profile (14) in a transfer region (22) from a central region (24) into an end region (14a, 14b) of the front wall cross member hollow profile (14).

**Revendications**

1. Structure porteuse pour un véhicule automobile, comprenant au moins deux montants avant (10), une paroi frontale (12) et une traverse de paroi frontale (14) réalisée sous la forme d'un profilé creux, dont les extrémités (14a, 14b) sont reliées au montant avant (10) respectivement associé, dans laquelle la liaison de l'extrémité de traverse de paroi frontale (14a, 14b) est effectuée par l'intermédiaire d'un emboîtement rigide aux couples dans le montant avant (10), dans laquelle le profilé creux de traverse de paroi frontale (14) présente une coquille extérieure (14.1) opposée à la paroi frontale et une coquille intérieure (14.2) tournée vers la paroi frontale, et dans laquelle une zone d'extrémité (14.2a) de la coquille intérieure (14.2) repose au moins en partie au niveau du montant avant (10), **caractérisée en ce qu'**une zone d'extrémité (14.1a) de la coquille extérieure (14.1) est disposée au moins en partie à l'intérieur du montant avant (10).

2. Structure porteuse selon la revendication 1, **caractérisée en ce que** la zone d'extrémité (14.1a), disposée à l'intérieur du montant avant (10), de la coquille extérieure (14.1) repose au moins en partie au niveau d'un élément de renforcement (16).

3. Structure porteuse selon la revendication 1 ou 2, **caractérisée en ce que** la zone d'extrémité (14.1a), disposée à l'intérieur du montant avant (10), de la coquille extérieure (14.1) repose au moins en partie au niveau d'un élément (18) du montant avant (10).

4. Structure porteuse selon la revendication 2 ou 3, **caractérisée en ce que** l'élément de renforcement (16) est relié, au niveau de ses extrémités (16a, 16b), respectivement au montant avant (10).

5. Structure porteuse selon la revendication 3 ou 4, **caractérisée en ce que** l'élément de renforcement (16) est relié, au niveau d'une extrémité (16a), à l'élément (18) du montant avant (10).

6. Structure porteuse selon l'une quelconque des revendications 3 à 5, **caractérisée en ce que** l'élément de renforcement (16) et l'élément (18) du montant avant (10) réalisent des brides (16a, 18a), par l'intermédiaire desquelles ils sont reliés l'un à l'autre, dans laquelle respectivement un porte-à-faux (16c, 18b) se raccorde à la bride (16a, 18a), au niveau duquel la zone d'extrémité (14.1a) de la coquille extérieure (14.1) repose au moins en partie.

7. Structure porteuse selon l'une quelconque des revendications 1 à 6, **caractérisée en ce qu'**un profilé de renforcement (20) est placé dans le montant avant (10) dans une zone du montant avant (10), dans laquelle la coquille intérieure (14.2) de la traverse de paroi frontale (14) repose.

8. Structure porteuse selon l'une quelconque des revendications 1 à 7, **caractérisée en ce qu'**un profilé de stabilisation (26) est disposé dans le profilé creux de traverse de paroi frontale (14) dans une zone de transition (22) allant d'une zone centrale (24) dans une zone d'extrémité (14a, 14b) du profilé creux de traverse de paroi frontale (14).

Fig.1

Fig.2

Fig. 3

Fig. 4 a

Fig. 4 b

**IN DER BESCHREIBUNG AUFGEFÜHRTE DOKUMENTE**

**In der Beschreibung aufgeführte Patentdokumente**

- DE 102006055721 A1
- EP 2353974 A2
- DE 19518946 A1
- WO 9504616 A1
- WO 2008050237 A1